# EUROPÄISCHE PATENTSCHRIFT

(11) **EP 0 636 797 B1**
(45) Veröffentlichungstag und Bekanntmachung des Hinweises auf die Patenterteilung: **23.07.1997**
(21) Anmeldenummer: 94106711.8
(22) Anmeldetag: 29.04.1994
(51) Int. Cl.: F16B 13/12

(54) **Schlagspreizdübel**
Expanding dowel fastened by impact
Cheville expansible à percussion

(30) Priorität: 26.06.1993 DE 4321300
(43) Veröffentlichungstag der Anmeldung: 01.02.1995
(73) Patentinhaber: fischerwerke Artur Fischer GmbH & Co. KG, D-72178 Waldachtal (DE)
(72) Erfinder: Weber, Wilfried, Dipl.-Ing. (FH), D-72296 Schopfloch (DE)

(56) Entgegenhaltungen:
- DE-A- 3 205 928
- DE-A- 3 930 790
- GB-A- 711 095
- GB-A- 2 091 368
- US-A- 1 392 108
- US-A- 3 461 771

## Beschreibung

Die Erfindung betrifft einen Schlagspreizdübel gemäß Oberbegriff des Anspruchs 1.

Aus der DE 32 05 928 A1 ist ein gattungsgemäßer Schlagspreizdübel zur Verankerung in einem Bohrloch mit einer sich konisch erweiternden Hinterschneidung bekannt. Der bekannte Schlagspreizdübel weist eine Spreizhülse mit Längsschlitzen zur Bildung eines Spreizbereichs an ihrem vorderen Ende auf. In nicht gespreiztem Zustand ist die Mantelfläche der Spreizhülse zylindrisch, nach dem Aufspreizen erweitert sie sich im Spreizbereich konisch. Zum Aufspreizen dient ein in eine sich konisch verengende Innenbohrung der Spreizhülse eintreibbarer Spreizdorn. Um den eingetriebenen Spreizdorn in axialer Richtung in der aufgespreizten Spreizhülse zu fixieren, ist in eine umlaufende Nut des Spreizdorns ein elastischer Ring eingesetzt, der gegen einen zylindrischen Teil der Innenbohrung der Spreizhülse drückt und durch Reibschluß den Spreizdorn in axialer Richtung in der Spreizhülse hält.

Der bekannte Schlagspreizdübel hat den Nachteil, daß er sich in einem harten Werkstoff wie Beton nur in einem Bohrloch verankern läßt das eine Hinterschneidung aufweist. Es ist jedoch aufwendig und bedarf spezieller Bohrvorrichtungen und Bohrwerkzeuge zur Herstellung einer Hinterschneidung in einem Bohrloch.

Der Erfindung liegt daher die Aufgabe zugrunde, einen Schlagspreizdübel zu schaffen, der sich in einem Bohrloch ohne Hinterschneidung in einem harten Werkstoff wie Beton verankern läßt, und bei dem der in die Spreizhülse des Schlagspreizdübels eintreibbare Spreizdorn in seiner Endposition sicher gehalten wird.

Die Lösung dieser Aufgabe erhält man durch die im Anspruch 1 angegebenen Merkmale. Ein radial federelastisches Element überragt die Mantelfläche des Spreizdorns und drückt in der Spreizposition - also bei eingetriebenem Spreizdorn - mit seiner Federkraft innen gegen die aufgespreizte Spreizhülse. Das federelastische Element sichert somit den Spreizdorn in dieser Position, wobei eine besondere Strukturierung oder Formgebung der Innenwandung der Spreizhülse die Sicherungsfunktion des federelastischen Elements zusätzlich unterstützen kann. Das federelastische Element hat auch den weiteren Vorteil, daß eine geringfügige Aufweitung des Bohrlochs durch Rißbildung in dessen Bereich von dem elastischen Federelement ausgeglichen werden kann. Es wird somit in einem gewissen Umfang ein Nachspreizverhalten durch das federelastische Element erreicht.

Damit sich der Schlagspreizdübel in einem zylindrischen Bohrloch in der Bohrlochwandung gut verankern kann, besitzt dieser eine Spreizhülse, die sich zu ihrem vorderen freien Ende hin verjüngt und eine nach außen gerichtete Schneide hat. Wird nun der Spreizdorn in die Spreizhülse eingetrieben, so wird dadurch die Schneide in die Bohrlochwandung gedrückt.

Der Spreizdorn besitzt vorzugsweise einen Kegelansatz, der in die Spreizhülse ragt und an deren Innenwandung im vorderen Bereich anliegt. Das federelastische Element liegt bei einem derartigen Spreizdorn im Bereich des Übergangs vom Kegelansatz zu einem zylindrischen Teil in einer Ringnut ein. Dies hat zur Folge, daß bei vollständig aufgespreizter Spreizhülse das federelastische Element im vorderen Bereich der Spreizhülse an deren Innenwandung angreift.

Als federelastisches Element kann ein Stahlring mit einem V-Profil verwendet werden, dessen offene Seite zum Nutengrund der Ringnut zeigt. Es kann auch ein Stahlring mit einem C-Profil Verwendung finden, wobei dann dessen offene Seite zu einer Seitenwand der Ringnut ausgerichtet ist. Beide Varianten haben den Vorteil, daß ein solcher Stahlring im Bereich seiner offenen Seite elastisch aufgeweitet oder zusammengedrückt werden kann, wodurch eine größere Elastizität erreicht wird, als bei einem Stahlring mit einem Rohrprofil. Ein Stahlring mit einem Rohrprofil hat jedoch den Vorteil, daß dieser sehr hohe Deformationskräfte benötigt und somit im elastischen Deformationszustand auch entsprechend hohe Spreizkräfte auf die Spreizhülse übertragen kann. Besonders vorteilhaft ist es, am vorderen, freien Ende der Spreizhülse die Innenbohrung mit einer sich erweiternden Gegenschräge auszubilden, an der der Spreizdorn mit seinem elastischen Element im aufgespreizten Zustand angreift. Die Gegenschräge verhindert, daß der Spreizdorn aufgrund von Erschütterungen aus der Spreizposition herausrutschen kann.

An der Stirnseite der Spreizhülse befindet sich vorzugsweise eine Distanzkappe aus Kunststoff oder einem anderen gleitfähigen Material, in deren Aufnahmeraum der Kegelansatz des Spreizdorns bei aufgespreizter Spreizhülse eingreift. Auf die Verwendung einer solchen Distanzkappe kann jedoch verzichtet werden, wenn am Spreizdübel ein Anschlag und im Bereich der Bohrlochöffnung übersteht und das Eindringen des Spreizdübel in das Bohrloch begrenzt. Da jedoch häufig die Ausbildung eines Anschlagbundes am Spreizdübel unerwünscht ist, läßt sich mit der Distanzkappe auf einfache Weise der erforderliche Freiraum für die Aufnahme des Kegelansatzes des eingetriebenen Spreizdorns schaffen.

Die Erfindung wird nachfolgend anhand eines in der Zeichnung dargestellten Ausführungsbeispiels näher erläutert.

Es zeigen:
Figur 1 den Schlagspreizdübel halbseitig im Schnitt,
Figur 2 den im Bohrloch eines Betonteils verankerten Schlagspreizdübel,
Figur 3 einen Ausschnitt im Bereich einer am Spreizdorn ausgebildeten Ringnut, in der ein im Querschnitt V-förmiger Stahlring einliegt,
Figur 4 einen Ausschnitt wie bei Figur 3, jedoch mit einem im Querschnitt C-förmig ausgebildeten Stahlring,
Figur 5 einen Abschnitt der Seitenansicht des V-förmigen Stahlrings von Figur 3 und
Figur 6 einen Ausschnitt der Mantelfläche des Stahlrings von Figur 3.

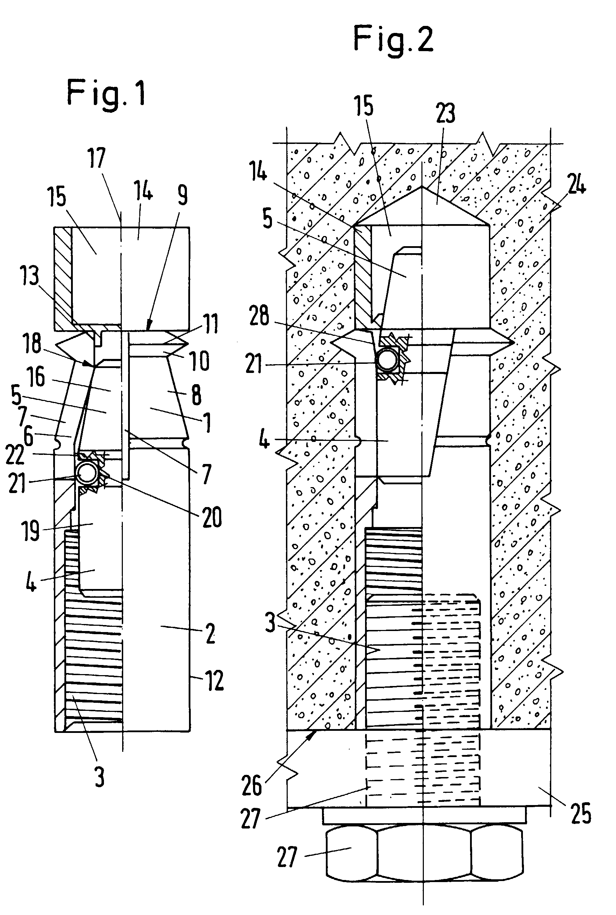

Der in Figur 1 dargestellte Schlagspreizdübel besteht aus einer aufspreizbaren Spreizhülse 1, die in einen Befestigungsteil 2 mit einem Innengewinde 3 übergeht. Ein Spreizdorn 4 mit einem sich konisch verjüngenden Kegelansatz 5 liegt in der Spreizhülse 1 ein, wobei der Kegelansatz 5 sich in eine sich verengende Innenbohrung 6 der Spreizhülse 1 erstreckt. Die Spreizhülse 1 besitzt am Umfang verteilt angeordnete Längsschlitze 7.

Die Spreizhülse 1 hat eine sich konisch verjüngende Mantelfläche 8, die sich bis zu einem am freien Ende 9 der Spreizhülse 1 ausgebildeten Ringbund 10 erstreckt. Der Ringbund 10 besitzt eine radial ausgerichtete, umlaufende Schneide 11, mit einem Durchmesser, der dem Durchmesser des Schaftes 12 des Schlagspreizdübels entspricht.

An der Stirnseite 13 der Spreizhülse 1 ist eine Distanzkappe 14 aufgesetzt, die einen Aufnahmeraum 15 hat, in den der Kegelansatz 5 zum Aufspreizen der Spreizhülse 1 eingetrieben werden kann. Der Kegelansatz 5 besitzt eine Mantelfläche 16 mit einem Neigungswinkel gegenüber der Mittelachse 17, der kleiner ist als der Neigungswinkel der Innenbohrung 6. Dadurch ergibt sich ein Anlagepunkt 18 im vorderen Bereich der Spreizhülse 1 beim Spreizvorgang.

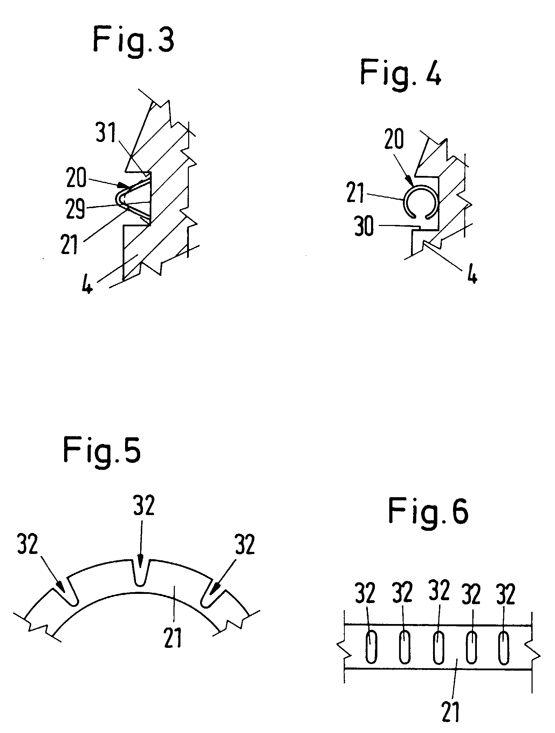

In dem Bereich, wo der zylindrische Teil 19 des Spreizdorns 4 in den Kegelansatz 5 übergeht, besitzt der Spreizdorn 4 eine Ringnut 20, in der als radial federelastisches Element ein Stahlring 21 mit einem Rohrprofil einliegt. Der Stahlring 21 ragt aus der Ringnut 20 heraus und liegt an der Innenwandung 22 an. Anstelle des in Figur 1 dargestellten Stahlrings 21 mit Rohrprofil können auch anders profilierte Stahlringe verwendet werden, wie dies beispielsweise in Figur 3 und Figur 4 gezeigt ist.

In Figur 2 ist der in einem Bohrloch 23 eines Betonteils 24 verankerte Schlagspreizdübel dargestellt. Der Spreizdorn 4 ist mittels eines Einschlagwerkzeuges in die dargestellte Position eingetrieben worden und ragt mit seinem Kegelansatz 5 in den Aufnahmeraum 15 der Distanzkappe 14. Der Ringbund 10 dringt in die Bohrlochwandung des Betonteils 24 ein, wodurch der Schlagspreizdübel fest im Betonteil 24 verankert ist. Ein zu befestigender Gegenstand 25 ist an der Wandoberlfäche 26 mittels einer in das Innengewinde 3 eingreifenden Befestigungsschraube 27 befestigt.

Zum freien Ende 9 geht die Innenbohrung 6 der Spreizhülse 1 über in eine sich nach außen konisch erweiternde Gegenschräge 28, an der der elastisch deformierte Stahlring 21 anliegt. Durch die elastische Deformation des Stahlrings 21 wirkt eine vom Stahlring 21 ausgehende Federkraft auf die Gegenschräge 28.

Dadurch wird einerseits der Spreizdorn 4 in der in Figur 2 dargestellten Spreizposition zusätzlich gesichert und es wird ein zusätzlicher Spreizdruck vom Stahlring 21 auf die Spreizhülse 1 übertragen. Bei einer geringfügigen Bohrlocherweiterung durch Rißbildung im Mauerwerk kann der Stahlring 21 die Spreizhülse 1 mit seiner Federkraft nachspreizen.

Der in Figur 3 dargestellte Stahlring 21 besitzt ein V-förmiges Profil, wobei seine offene Seite zum Nutengrund 29 der Ringnut 20 zeigt. Der Stahlring 21 läßt sich in die Nut 20 federelastisch eindrücken, wobei er dann die mit unterbrochenen Linien 31 dargestellte Form einnimmt.

In Figur 4 wird ein Stahlring mit C-förmigem Profil gezeigt, dessen offene Seite zu einer Seitenwand 30 der Ringnut 20 ausgerichtet ist.

Der in Figur 3 dargestellte Stahlring 21 besitzt Einschnitte 32 die in Figur 5 in der Seitenansicht und in Figur 6 in der Draufsicht dargestellt sind.

## Patentansprüche

1. Schlagspreizdübel für die Verankerung in einem Bohrloch (23) eines Betonteils (24) oder dergleichen Mauerwerks, mit einer im Bohrloch (23) aufspreizbaren, längsgeschlitzten Spreizhülse (1), in deren sich konisch verengende Innenbohrung (6) ein Spreizdorn (4) eintreibbar ist, und mit einem radial federelastischen Element (21), das in unbelastetem Zustand an einer Mantelfläche des Spreizdorns (4) übersteht, **dadurch gekennzeichnet,** daß sich die noch nicht aufgespreizte Spreizhülse (1) zu ihrem vorderen, freien Ende (9) hin bis zu einem Ringbund (10) verjüngt, der eine radial ausgerichtete Schneide (11) hat, und daß das federelastische Element ein Stahlring (21) mit einem Hohlprofil ist, der mit seiner Federkraft von innen gegen die sich konisch verengende Innenbohrung (6) der aufgespreizten Spreizhülse (1) drückt.

2. Schlagspreizdübel nach Anspruch 1, **dadurch gekennzeichnet,** daß der Spreizdorn (4) einen in die sich konisch verengende Innenbohrung (6) der Spreizhülse (1) beim Aufspreizvorgang eingreifenden Kegelansatz (5) hat, und daß sich im Bereich des Übergangs vom Kegelansatz (5) zu einem zylindrischen Teil (19) des Spreizdorns (4) eine Ringnut (20) am Spreizdorn (4) ausgebildet ist, in der der Stahlring (21) einliegt.

3. Schlagspreizdübel nach Anspruch 2, **dadurch gekennzeichnet**, daß der Stahlring (21) ein V-Profil hat, dessen offene Seite zum Nutengrund (29) der Ringnut (20) zeigt.

4. Schlagspreizdübel nach Anspruch 2, **dadurch gekennzeichnet**, daß der Stahlring (21) ein C-Profil hat, dessen offene Seite zu einer der beiden Seitenwände (30) der Ringnut (20) zeigt.

5. Schlagspreizdübel nach einem der vorhergehenden Ansprüche, **dadurch gekennzeichnet**, daß bei in die Spreizhülse (1) eingetriebenem Spreizdorn (4) am vorderen, freien Ende (9) der Spreizhülse (1) die Innenbohrung (6) eine sich nach außen konisch erweiternde Gegenschräge (28) hat, gegen die das federelastische Element (21) radial verspannt ist.

6. Schlagspreizdübel nach einem der vorhergehenden Ansprüche, **dadurch gekennzeichnet**, daß an der Stirnseite (13) der Spreizhülse (1) eine Distanzkappe (14) aufgesetzt ist, die einen Aufnahmeraum (15) für den Kegelansatz (5) des bei aufgespreizter Spreizhülse (1) eingetriebenen Spreizdorns (4) hat.

## Claims

1. Impact-type expansible plug for anchorage in a drilled hole (23) in a concrete part (24) or similar masonry with a longitudinally slit expansion sleeve (1) which can be expanded in the drilled hole (23) and into the conically narrowing internal bore (6) of which an expansion mandrel (4) can be driven, and with a radially resilient element (21) which, in its unstressed state, projects at an outer surface of the expansion mandrel (4), **characterized in that** the as yet unexpanded expansion sleeve (1) tapers towards its forward free end (9) as far as an annular collar (10), which has a radially directed cutting edge (11), and in that the resilient element is a steel ring (21) with a hollow profile which presses with its spring force from inside against the conically narrowing internal bore (6) of the expanded expansion sleeve (1).

2. Impact-type expansible plug according to Claim 1, **characterized in that** the expansion mandrel (4) has a conical extension (5) which during the expansion process engages in the conically narrowing internal bore (6) of the expansion sleeve (1), and in that in the region of the transition from the conical extension (5) to a cylindrical part (19) of the expansion mandrel (4) an annular groove (20) is formed on the expansion mandrel (4), in which groove lies the steel ring (21).

3. Impact-type expansible plug according to Claim 2, **characterized in that** the steel ring (21) has a V-shaped profile, the open side of which points towards the bottom (29) of the annular groove (20).

4. Impact-type expansible plug according to Claim 2, **characterized in that** the steel ring (21) has a C-shaped profile, the open side of which points towards one of the two side walls (30) of the annular groove (20).

5. Impact-type expansible plug according to one of the preceding Claims, **characterized in that** when the expansion mandrel (4) is driven into the expansion sleeve (1), on the forward free end (9) of the expansion sleeve (1) the internal bore (6) has a counter slope (28) which widens conically outwards and against which the resilient element (21) is radially braced.

6. Impact-type expansible plug according to one of the preceding Claims, **characterized in that** on the end (13) of the expansion sleeve (1) there is placed a spacer cap (14) which has a receiving chamber (15) for the conical extension (5) of the expansion mandrel (4) driven in when the expansion sleeve (1) is expanded.

## Revendications

1. Cheville expansible à percussion destinée à être ancrée dans un trou (23) percé dans un élément en béton (24) ou dans un ouvrage de maçonnerie similaire, cheville comportant une douille d'expansion (1) susceptible de s'expanser dans le trou percé (23) et munie de fentes longitudinales dans l'alésage intérieur (6) qui se rétrécit coniquement, de laquelle un boulon d'expansion (4) peut être enfoncé et comportant un élément (21) élastique qui dépasse radialement, à l'état exempt de contrainte sur une surface extérieure du boulon d'expansion (4), cheville caractérisée en ce que la douille d'expansion (1) encore non expansée se rétrécit à son extrémité avant libre (9) jusqu'à un collet annulaire (10) qui possède un tranchant (11) orienté radialement, et en ce que l'élément élastique est un anneau d'acier (21) doté d'un profil creux qui, grâce à sa force élastique, pousse de l'intérieur contre l'alésage intérieur (6), qui se rétrécit coniquement, de la douille d'expansion (1) à l'état expansé.

2. Cheville expansible à percussion selon la revendication 1, caractérisée en ce que le boulon d'expansion (4) comporte un appendice conique, qui pénètre dans l'alésage intérieur (6), allant en se rétrécissant coniquement, de la douille d'expansion (1), lors du processus d'expansion et en ce que, dans la zone de transition allant de l'appendice conique (5) à une partie cylindrique (19) du boulon d'expansion (4), est formée une rainure annulaire (20) sur le boulon d'expansion (4), rainure dans laquelle est placé l'anneau d'acier (21).

3. Cheville expansible à percussion selon la revendication 2, caractérisée en ce que l'anneau d'acier (21) a un profil en V dont le côté ouvert est orienté vers le fond (29) de la rainure annulaire (20).

4. Cheville expansible à percussion selon la revendication 2, caractérisée en ce que l'anneau d'acier (21) a un profil en C dont le côté ouvert est orienté vers l'une des deux parois latérales (30) de la rainure annulaire (20).

5. Cheville expansible à percussion selon les revendications précédentes, caractérisée en ce que le boulon d'expansion (4) étant enfoncé dans la douille d'expansion (1), l'alésage intérieur (6) comporte, à l'extrémité avant libre (9) de la cheville expansible à percussion (1), une contre-pente (28) contre laquelle l'élément élastique (21) est comprimé dans le sens radial.

6. Cheville expansible à percussion selon l'une des revendications précédentes, caractérisée en ce que du côté frontal (13) de la douille d'expansion (1) est placée une coiffe (14) de maintien de distance qui comporte un logement (15) espacé destiné à recevoir l'appendice conique (5) du boulon d'expansion (4) enfoncé dans la douille d'expansion (1) expansée.
